# EUROPEAN PATENT APPLICATION

(11) **EP 4 844 111 A1**
(43) Date of publication of application: **25.11.2026**
(21) Application number: 25178595.2
(22) Date of filing: 23.05.2025
(51) Int. Cl.: C25B 15/08, C25B 1/04, C25B 1/34

(54) **REACTION CYCLE FOR CONCENTRATING CO2**

(71) Applicant: University of Nova Gorica, 5001 Nova Gorica (SI)
(72) Inventor: VALANT, Matjaz, 5001 Nova Gorica (SI); LUIN, Uros, 5001 Nova Gorica (SI)
(74) Representative: Weickmann & Weickmann PartmbB

(57) **Abstract**

The present invention relates to a reaction cycle for concentrating CO₂ and simultaneously producing hydrogen and oxygen.

## Description

The present invention relates to a reaction cycle for concentrating CO₂ and simultaneously producing hydrogen and oxygen.

Capturing and storing CO₂ emissions from various sources such as power plants, industrial facilities, such as concrete plants, transportation, etc. can help in preventing the release of large amounts of CO₂ into the atmosphere thereby reducing its warming effect. In industrial and power plants, CO₂ can be captured before or after combustion or through combustion using oxygenated flue. Various methods can be used to remove CO₂ from flue gases including absorption, adsorption, membrane technology, microalgae and chemical looping. These technologies are typically integrated by way of industrial components, such as absorption columns, towers, separation units, adsorption layers, membrane modules or gas treatment equipment for CO₂ capture. Post-combustion CO₂ capture interferes the least with existing industrial processes, as the capture component can be added to the existing infrastructure. Among the various techniques, absorption and adsorption are the most researched and frequently used with absorption being the preferred method for carbon capture.

One goal of capturing CO₂ is its concentration so that CO₂ can be efficiently transported, stored or converted at high yields.

In chemical absorption, amines such as monoethanol amine (MEA), diethanol amine (DEA) and triethyl amine (TEA) are typically used to collect CO₂ mostly in post-combustion capture systems. By reacting CO₂ with those amines carbamates are generated. CO₂ can be released by heating the carbamate solution. Said regeneration process is highly energy intensive. Moreover, said amine solvents often need to be replaced due to solvent degradation during the process leading to losses. Furthermore, the solvent used is toxic, environmentally hazardous and quite corrosive.

Alternatively, the CO₂ may be absorbed by hydroxide solutions. CO₂ absorption capacity of a NaOH solution is greater than that of the above-mentioned amine solutions. The theoretical amounts of MEA and NaOH needed to capture 1 ton of CO₂ are 1.39 tons and 0.9 tons, respectively. Additionally, NaOH is more readily available and cheaper than MEA. A detailed study on CO₂ absorption in a NaOH solution dates back to the 1940s, but research from that period did not focus on reducing CO₂ emissions in connection with the emergence of global climate change. Most of these studies concentrated on academic investigations, particularly on mass transfer coefficients, absorption rates, film resistance and system capacity. The CO₂ problematics were only extensively researched after 1980.

In recent years, extensive research has been conducted on CO₂ capture by hydroxides. A method for capturing CO₂ using a packed bed and an aqueous NaOH solution was proposed. In addition, studies have been carried out on CO₂ absorption using a scrubber, i.e. a device that employs a spray-based capture method. The research focused on improving the absorption capacity of a high velocity spray scrubber. The CO₂ capture system based on hydroxide solutions is the second most common process used in the industry to prevent CO₂ emissions. CO₂ continuously reacts with hydroxide to form carbonates and/or hydrogen carbonates. The following equation represents the reaction occurring in the liquid phase resulting in a metal carbonate in a dissociated form:

CO₂ + 2M⁺OH⁻ **→** 2 M⁺ + CO₃²⁻ + H₂O.

The release of carbon dioxide from carbonates and/or hydrogen carbonates may be achieved by thermal regeneration or chemical regeneration. For thermal regeneration, the metal carbonate, in particular sodium carbonate is heated to about 800-900°C to convert sodium carbonate into CO₂ and sodium oxide (Na₂O). After thermal treatment, Na₂O is dissolved in water to produce NaOH.

In an alternative chemical regeneration, sodium carbonate is reacted with calcium hydroxide to form calcium carbonate and sodium hydroxide. The cycle can be completed by calcining calcium carbonate to produce lime and CO₂ at temperatures of about 800-900°C.

Each method of NaOH regeneration in CO₂ capture systems has its drawbacks. Amine-based solvent regeneration involves complex handling of solvents, lower efficiency and additional costs for solvent replenishment; thermal regeneration requires significant amounts of energy and leads to equipment degradation; and chemical regeneration with lime is energy-intensive, produces by-products and is also operationally complex.

The problem underlying the present invention is the provision of an energy-efficient, cost-efficient, environmantal neutral (safe) and non-hazardous way to concentrate CO₂ and simultaneously producing hydrogen and oxygen with minimum equipment efforts.

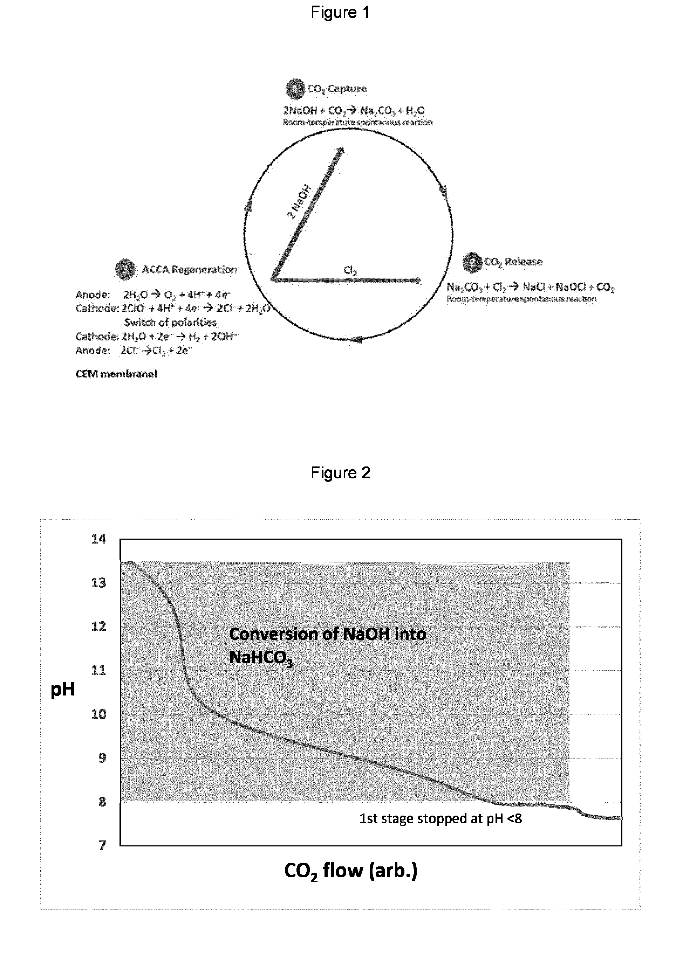

The problem is solved by a closed-loop material cycle allowing for the concentration of CO₂ with simultaneous production of hydrogen and oxygen. In this cycle, materials are not consumed but continuously circulated except for water that decomposes into oxygen and hydrogen. The specific reactions within the cycle are known to the skilled person. However, the combination of these reactions in a closed-loop configuration has never been described before. The closed-loop setup is conducted in a very integrated way allowing very little equipment efforts and high yields considering the overall energy effort. The scheme shown in figure 1 illustrates the cycle.

Thus, in a first aspect, the present invention relates to a reaction cycle for concentrating CO₂ and producing hydrogen and oxygen comprising the steps
(i) reacting at least one aqueous alkaline metal hydroxide solution with CO₂ to provide aqueous alkaline metal carbonate and/or alkaline metal hydrogen carbonate salt solution;
(ii) reacting the solution obtained after step (i) with chlorine to provide aqueous alkaline metal chloride salt solution, aqueous alkaline metal hypochlorite salt solution, and CO₂;
(iii) electrolyzing the solution obtained after step (ii) for converting aqueous alkaline metal hypochlorite salt solution to aqueous alkaline metal chloride salt solution and oxygen; and
(iv) electrolyzing the solution obtained after step (iii) for converting aqueous alkaline metal chloride salt solution to aqueous alkaline metal hydroxide solution, chlorine (Cl₂), and hydrogen (H₂);
wherein aqueous alkaline metal hydroxide solution generated during step (iv) is redirected to step (i) and chlorine generated during step (iv) is redirected to step (ii).

In a preferred embodiment, the alkaline metal is selected from the group consisting of lithium, sodium, potassium and rubidium, more preferably sodium and potassium, even more preferably sodium. The concentration of the aqueous alkaline metal hydroxide solution in step (i) is preferably at least 50 g/l or more and up to a saturated alkaline metal hydroxide solution in water, more preferably 50-300 g/l at 20°C. Preferably, the aqueous alkaline metal hydroxide solution in step (i) consists of at least one alkaline metal hydroxide and water.

The carbon dioxide used in step (i) may be derived from (industrial) flue gases, e.g. from concrete plants, biogenic CO₂, e.g. deriving from biogas plants, volcanoes, or naturally occurring CO₂ in ambient air, in particular from flue gas.

The carbon dioxide is preferably injected into the aqueous alkaline metal hydroxide solution in step (i). Conventional scrubbers, spray towers or absorption columns, can be used. Alternatively, carbon dioxide is dissolved and added to the aqueous alkaline metal hydroxide solution in step (i).

Step (i) is conducted preferably in a liquid state and/or at temperatures between 10 and 50°C.

The CO₂ used in step (i) is preferably used in a molar stoichiometric excess as compared to the alkaline metal hydroxide. Excessive CO₂ not used in step (i) may be collected and redirected to step (i). Step (i) may be conducted batch-wise or continuously.

The following equation represents the possible reactions occurring in the liquid phase in step (i).

2 CO₂ + 4M⁺OH⁻ **→** 4 M⁺ + CO₃²⁻ + HCO₃⁻ + 2 H₂O (with M being an alkaline metal) The reaction step (i) is spontaneous

In step (ii) the solution obtained after step (i) is reacted with chlorine (Cl₂) to provide aqueous alkaline metal chloride salt solution, aqueous alkaline hypochlorite salt solution and CO₂:

Cl₂ + 2M⁺ + CO₃²⁻ **→** 2M⁺ + Cl⁻ + ClO⁻ + CO₂

Cl₂ + 2 M⁺ + 2 HCO₃⁻ **→** 2M⁺ + Cl⁻ + CIO⁻ + 2 CO₂ + H₂O

In this reaction, chlorine (Cl₂) undergoes disproportionation producing Cl⁻ as well as the less desired hypochlorite (ClO⁻). The reaction step (ii) is spontaneous.

Chlorine is added to the solution obtained after step (i) preferably in form of chlorine dissolved in water or in a gaseous state, more preferably in gaseous state. The reaction is preferably conducted at temperatures at which the reaction media are in a liquid state, more particularly at temperatures of 10-50°C. The molar ratio of Cl₂ : (hydrogen)carbonate is preferably in the range of 0.8-1.2:1, more preferably chlorine is used in a molar stochiometric amount compared to (hydrogen)carbonate.

The carbon dioxide generated during step (ii) is collected by known measures such as compressing and storing into pressurized tanks.

The collected carbon dioxide preferably has a higher concentration as compared to the concentration of CO₂ used as starting material in step (i) and more preferably has a purity of at least 80%, even more preferably 80-99.9%, even more preferably 90-99% by volume.

The carbon dioxide collected after step (ii) may be stored or further processed. In one embodiment, the carbon dioxide obtained after step (ii) may be at least partially redirected to step (i).

In step (iii), the solution obtained after step (ii) is electrolyzed for converting aqueous alkaline metal hypochlorite salt solution to alkaline metal chloride salt solution and oxygen. The Cl⁺ species in the ClO⁻-ion is reduced to Cl⁻ at the cathode, while water is oxidized to oxygen at the anode:

| | | | |
|---|---|---|---|
| Anode: | 2 H₂O | → O₂ + 4H⁺ + 4e⁻ | (E₀= + 1.23V) |
| Cathode: | CIO⁻ + 2H⁺ + 2e⁻ | → Cl⁻ + H₂O | (E₀= + 0.89V) |

The electrolysis in step (iii) is preferably conducted in a two-compartment electrolyzer, preferably with titanium electrodes and cation exchange membrane.

The electrolysis in step (iii) is preferably conducted at a current density of 5-1000 A/m² and/or a potential of 1.5-4 Volt. The temperature in step (iii) is preferably set such that the reaction components are in a liquid state, particularly at a temperature of 10-50°C.

The molar concentration of the hypochlorite species in the solution obtained after step (ii) is preferably about 10-50% of the molar starting alkaline metal hydroxide concentration in step (i), more preferably 40-50%.

The oxygen produced during step (iii) is preferably collected and has preferably a purity of at least 80%, more preferably 80-99.9%, even more preferably 90-99.9% by volume.

The reaction in step (iii) is considered to be completed when the current through the salt solution drops. After step (iii) the solution only contains water and alkaline metal chloride salt.

In step (iv), the solution obtained after step (iii), i.e. the aqueous alkaline metal chloride salt solution, is converted to alkaline metal hydroxide solution, chlorine and hydrogen via electrolysis:

| | | | |
|---|---|---|---|
| Anode: | 2 Cl⁻ | → Cl₂ + 2e⁻ | (E₀= - 1.36V) |
| Cathode: | 2 H₂O + 2e⁻ | → H₂ + 2 OH⁻ | (E₀= - 0.83V) |

The electrolysis in step (iv) is conducted preferably in a two-compartment electrolyzer, more preferably with titanium electrodes, even more preferably coated with an additional catalytic layer, e.g. comprising Nickel or Pt or Pt group metals, particularly for H₂ evolution, or mixed metal oxides, particularly for chlorine evolution, and cation exchange membrane.

The electrolysis is preferably conducted at a current density of 5-1000 A/m² and/or a potential of 1.5-4 V. The temperature is set such that the components are in a liquid state, preferably at a temperature of 10-90°C.

Advantageously, the solution obtained after step (iii) does not have to be transferred to another reaction vessel but may remain in the electrolyzer used in step (iii) in which the polarization on the electrodes is only changed. Switching the polarities after step (iii) allows for a new electrochemical process. Doing so, the cathode of step (iii) is switched to the anode in step (iv) thereby the catholyte becomes anolyte. Vice versa, the anode in step (iii) becomes the cathode in step (iv) and the anolyte becomes the catholyte, respectively.

As mentioned above, it is preferred that the electrolysis in steps (iii) and (iv) is conducted in the same electrolyzer. In such embodiment, the polarity of the electrodes in the electrolyzer is preferably changed after step (iii).

The hydrogen generated during step (iv) is preferably collected and has preferably a purity of at least 90%, more preferably 90-99.9% and even more preferably 95-99% by volume.

The hydrogen produced may be further processed into synthetic fuels, such as syngas, methane, or methanol, or used directly as an energy source, either through combustion or for electricity generation via fuel cells.

The chlorine generated during step (iv) is preferably collected and has preferably a purity of at least 90%, more preferably 90-99.9% and even more preferably 95-99% by volume. The chlorine generated during step (iv) and obtained after step (iv) can be redirected to step (ii).

The hydroxide salt solution generated during step (iv) and obtained after step (iv) can be redirected to step (i).

The reaction cycle according to the invention allows a net reaction of

2H₂O → 2H₂ + O₂,

in case, the carbon dioxide obtained in step (ii) is redirected to step (i).

Indeed, it is preferable to use the concentrated CO₂ obtained after step (ii) in other applications and to feed less valuable (= less concentrated) CO₂ from other sources into step (i).

The reaction cycle involves spontaneous, exothermic reactions in the first two steps, releasing approximately 1.3 MWh of heat per ton of CO₂ captured. The subsequent electrochemical steps require about 0.5 to 1.0 MWh for hypochlorite decomposition and an additional 2.0 to 2.5 MWh for chloride-to-chlorine conversion. Importantly, hydrogen is produced in this stage as a byproduct, with an energy value of approximately 0.9 MWh per ton of CO₂.

Conventional capturing processes, such as MEA systems require about 1.2-3.0 MWh per ton of CO₂ captured and released, primarily due to the significant thermal input needed for solvent regeneration. This high energy demand substantially reduces the net efficiency of the technology. Moreover, MEA degrades over time in the presence of oxygen, SOx, and NOx, forming heat-stable salts and potentially toxic degradation products. This degradation increases operating costs due to solvent loss, corrosion, and the need for frequent waste handling and emission monitoring.

In another aspect, the present invention also relates to the use of the reaction cycle according to the invention for storing and/or concentrating carbon dioxide.
**Figure 1****:** Scheme of the reaction cycle according to the invention
**Figure 2****:** Conversion of NaOH into NaHCO₃ during step (i)
**Figure 3****:** pH over Cl₂ flow during step (ii)
**Figure 4****:** Raman spectra of the solution before and after step (ii)
**Figure 5****:** Current density over time during step (iii)
**Figure 6****:** UV-Vis spectra of the solution before and after step (iii)
**Figure 7****:** I-V Curve during step (iv)

### Example

### Step (i): Absorption of CO₂

| | |
|---|---|
| 2NaOH + CO₂ → Na₂CO₃ + H₂O | (pH>10) |
| Na₂CO₃ + CO₂ + H₂O → 2NaHCO₃ | (10<pH<7.8) |

In a 500 mL glass reactor equipped for vigorous stirring and continuous pH monitoring, CO₂ was introduced at 100 L h⁻¹ through a sintered-glass frit submerged in 250 mL of 2 M NaOH to maximize gas-liquid contact. Upon CO₂ absorption, the solution temperature rose rapidly from 25 °C to >40 °C.

When CO₂ is bubbled through a NaOH solution, it reacts to form sodium carbonate (Na₂CO₃), initially causing a sharp decrease in pH (Figure 2). As the pH drops below the second pKa of carbonic acid (≈10.3), Na₂CO₃ is gradually converted into sodium hydrogencarbonate (NaHCO₃). Since the solubility of NaHCO₃ in water is relatively low, part of it precipitates while the remainder stays in a saturated solution, which has a pH of approximately 8. With continued CO₂ flow, a small amount of CO₂ dissolves directly in water (its solubility is 0.033 mol/L at 25 °C), contributing further to the pH decrease. Step (i) is stopped when pH drops to ≤8.

### Step (ii): Release of CO₂ with Cl₂

Buffer reaction:

Cl₂+H₂O 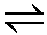 HOCl+H⁺+Cl⁻

H⁺+HCO₃ ⁻→H₂CO₃ 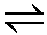 CO₂+H₂O

(protons are consumed)

No more carbonate:

Cl₂+H₂O 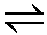 HOCl+**H**⁺+Cl⁻

(protons are causing sharp drop in pH)

In a 500 mL glass reactor equipped for vigorous stirring, continuous pH and temperature monitoring. A total of 250 mL of carbonate solution (Na₂CO₃/NaHCO₃), obtained in step (i), was introduced into the reactor. Chlorine gas was introduced at a flow rate of approximately 4 L/h.

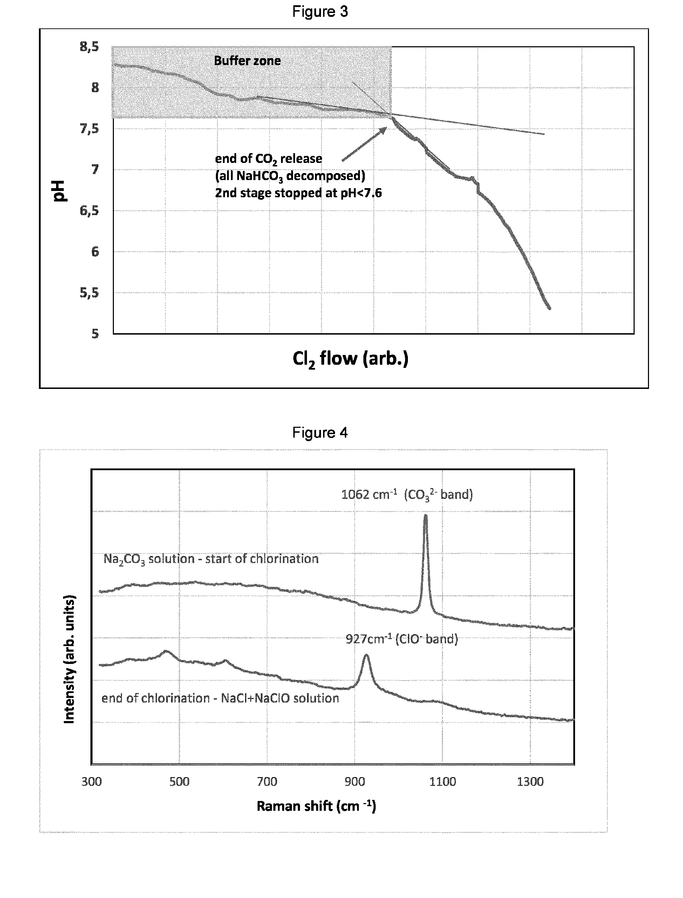

When chlorine is bubbled through a saturated solution of NaHCO₃ (which also contains precipitated NaHCO₃), it first undergoes disproportionation into chloride (Cl⁻) and hypochlorite (ClO⁻). The chloride ion fully dissociates in water, while hypochlorite exists in equilibrium with hypochlorous acid: HClO 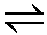 H⁺ + ClO⁻. The protons released during the disproportionation reaction are immediately neutralized by hydrogencarbonate ions (HCO₃⁻), forming carbonic acid (H₂CO₃), which then decomposes into CO₂ and H₂O. As dissolved hydrogencarbonate is consumed, more of the precipitated NaHCO₃ dissolves to restore equilibrium, enabling the reaction to continue. This constitutes a classic buffering process, during which the pH changes only slightly. Once all hydrogencarbonate-both dissolved and precipitated-is depleted, further addition of chlorine leads to a sharp drop in pH (Figure 3). Step (ii) is stopped when pH drops to ≤7.6.

### Raman spectra of the solution before and after step (ii)

In Figure 4 Raman spectra of the solution before and after step (ii) are shown. The upper curve represents the Raman spectrum of the solution before the start of step (ii), showing a characteristic absorption band of CO₃²⁻, indicating the presence of HCO₃⁻ species.

The lower curve shows the Raman spectrum of the solution after step (ii), where no carbonate-related absorption is observed. Instead, a distinct absorption band corresponding to CIO⁻ appears, confirming the presence of hypochlorite.

### Step (iii): Electrolytic decomposition of hypochlorite

| | | |
|---|---|---|
| Anode: | 2H₂O → O₂ + 4H⁺ + 4e⁻ | (E₀= + 1.23V) |
| Cathode: | CIO⁻ + 2H⁺ + 2e⁻→ Cl⁻ + H₂O | (E₀= + 0.89V) |

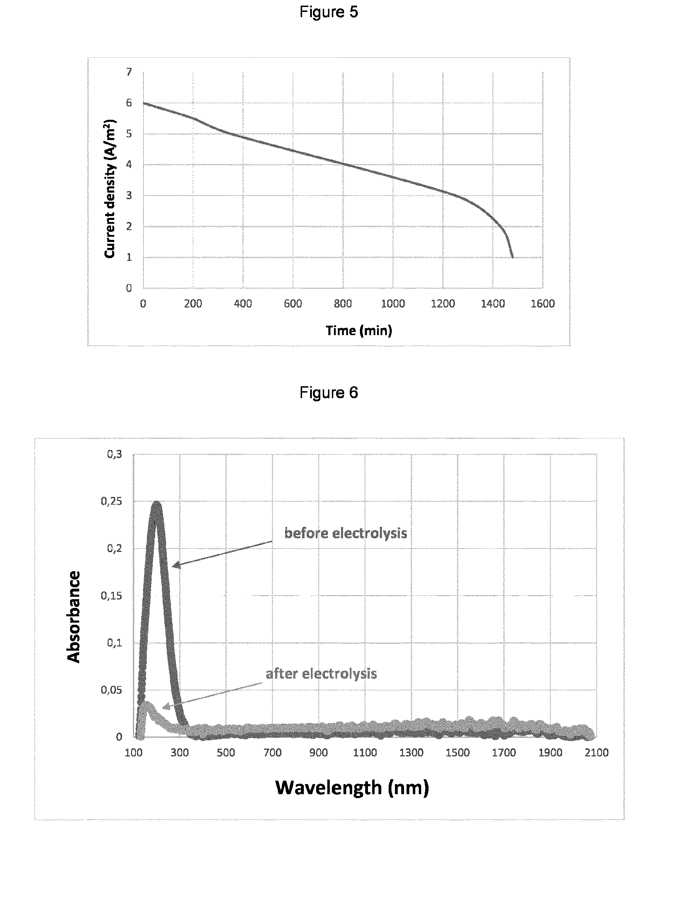

In a two-compartment cell (anolyte & catholyte chambers, each 200 mL) separated by a CEM (CMI 7000S, Membrane International, anolyte consisted of 200 mL of 5 % NaOH, while the catholyte was 200 mL of NaCl/NaCIO solution obtained at step (ii). Both electrodes were 10 × 10 cm perforated titanium plates (2 mm thick) plated with a 10 µm layer of Pt. Two peristaltic pumps continuously recirculated and degassed each compartment to ensure uniform mixing and remove evolved gases. The cell voltage was held at 1.5 V to suppress water splitting and favor NaClO reduction. Initial currents reached 6 A/m² and steadily declined as the NaClO concentration fell (Figure 5).

Under constant voltage of 1.5 V the initial current density was ~6 A/m² indicating a rapid reduction of ClO⁻. From 0-1200 min, current falls to ~3 A/m² as ClO⁻ concentration decreases and diffusion slows (linear decline). Current drops sharply to ~1 A/m² at 1500 min indicating near-complete CIO⁻ consumption (Mass-transport limit). Step (iii) is stopped when the current drops close to zero.

### UV-vis spectra of the solution before and after step (iii)

In Figure 6 UV-vis spectra of the solution before and after step (iii) are displayed. The UV-vis spectrum of the solution before the start of step (iii) shows a characteristic absorption band of CIO⁻. The UV-vis spectrum of the solution after step (iii) only traces of the hypochlorite can be observed.

### Step (iv): Brine electrolysis (switch of polarities):

| | | |
|---|---|---|
| Anode: | 2Cl- → Cl₂ + 2e⁻ | (E₀= - 1.36V) |
| Cathode: | 2 H₂O + 2e⁻ → H₂ + 2 OH⁻ | (E₀= - 0.83V) |

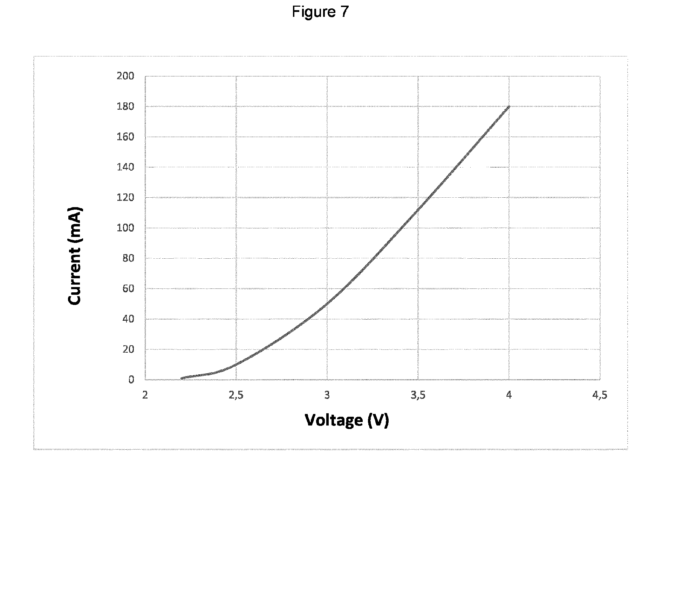

Immediately after NaClO reduction, the DC leads on the same two-compartment cell (CMI 7000S CEM; 10 × 10 cm, 2 mm-thick Pt/Ti electrodes) were reversed. The catholyte (formerly the anolyte) contained 200 mL of 2 M NaCl (product of NaClO reduction), and the anolyte (formerly the catholyte) held 200 mL of ~5 % NaOH. Both chambers were recirculated and degassed via peristaltic pumps to ensure uniform mixing and remove evolved gases. A stepwise voltage ramp from 2.2 V to 4.0 V was applied while recording the current to generate the I-V curve (Figure 7).

After switching the polarities on the electrolytic cell, the electrolysis of NaCl began. This process is a classical brine electrolysis. The measured I-V curve is consistent with this reaction. Electrolysis starts at an onset voltage of approximately 2.2 V, after which the current increases linearly with voltage, indicating ohmic behavior.

### Gaseous product detection

To confirm the evolution of hydrogen at the cathode and chlorine at the anode, we used a hydrogen and chlorine detector (type: Drager X-am 5000 with H₂ and Cl₂ sensors). In both cases the evolution of the gases was confirmed.

The present invention covers the following items:
1. Reaction cycle for concentrating CO₂ and producing hydrogen and oxygen comprising the steps
   (i) reacting at least one aqueous alkaline metal hydroxide solution with CO₂ to provide aqueous alkaline metal carbonate and/or alkaline metal hydrogen carbonate salt solution;
   (ii) reacting the solution obtained after step (i) with chlorine to provide aqueous alkaline metal chloride salt solution, aqueous alkaline metal hypochlorite salt solution, and CO₂;
   (iii) electrolyzing the solution obtained after step (ii) for converting aqueous alkaline metal hypochlorite salt solution to aqueous alkaline metal chloride salt solution and oxygen; and
   (iv) electrolyzing the solution obtained after step (iii) for converting aqueous alkaline metal chloride salt solution to aqueous alkaline metal hydroxide solution, chlorine (Cl₂), and hydrogen (H₂);
   wherein aqueous alkaline metal hydroxide solution generated during step (iv) is redirected to step (i) and chlorine generated during step (iv) is redirected to step (ii).
2. Reaction cycle according to item 1, wherein the alkaline metal is selected from the group consisting of lithium, sodium, potassium, and rubidium, in particular sodium and potassium.
3. Reaction cycle according to any of the preceding items wherein the concentration of the aqueous alkaline metal hydroxide solution in step (i) is 50 g/I or more up to a saturated aqueous alkaline metal hydroxide solution, preferably 50 - 300 g/l.
4. Reaction cycle according to any of the preceding items, wherein CO₂ dissolved in water is added to or gas containing CO₂, in particular flue gas, is injected into the aqueous alkaline metal hydroxide solution in step (i).
5. Reaction cycle according to any of the preceding items, wherein step (i) is conducted in a liquid state.
6. Reaction cycle according to any of the preceding items, wherein CO₂ is used in a stoichiometric excess as compared to hydroxide in step (i).
7. Reaction cycle according to any of the preceding items, wherein in step (ii) chlorine dissolved in water is added to the solution obtained after step (i).
8. Reaction cycle according to any of the preceding items, wherein step (ii) is conducted at temperatures of 10 - 50 °C.
9. Reaction cycle according to any of the preceding items, wherein in step (ii) chlorine is used in a stoichiometric amount as compared to carbonate and/or hydrogen carbonate salt.
10. Reaction cycle according to any of the preceding items, wherein CO₂ generated during step (ii) is collected and has preferably a purity of 80 %-99,9%.
11. Reaction cycle according to any of the preceding items, wherein CO₂ generated during step (ii) is at least partially redirected to step (i).
12. Reaction cycle according to any of the preceding items, wherein the electrolysis in step (iii) is conducted at a current density of 5-1000 A/m².
13. Reaction cycle according to any of the preceding items, wherein the electrolysis in step (iii) is conducted at a potential of 1.5 - 4 V.
14. Reaction cycle according to any of the preceding items, wherein the electrolysis in step (iii) is conducted at a temperature of 10 - 50 °C.
15. Reaction cycle according to any of the preceding items, wherein the hypochlorite salt concentration in step (iii) corresponds to 10-50% of the hydroxide concentration in step (i).
16. Reaction cycle according to any of the preceding items, wherein O₂ generated during step (iii) is collected and has preferably a purity of 80-99.9 %.
17. Reaction cycle according to any of the preceding items, wherein the electrolysis in step (iv) is conducted at a current density of 5-1000 A/m².
18. Reaction cycle according to any of the preceding items, wherein the electrolysis in step (iv) is conducted at a potential of 1.5 - 4 V.
19. Reaction cycle according to any of the preceding items, wherein the electrolysis in step (iv) is conducted at a temperature of 10 - 90 °C.
20. Reaction cycle according to any of the preceding items, wherein the electrolysis in step (iii) and (iv) is conducted each in a two-compartment electrolyzer, preferably with titanium electrodes and cation exchange membrane.
21. Reaction cycle according to any of the preceding items, wherein the electrolysis in steps (iii) and (iv) is conducted in the same electrolyzer, in particular in a two-compartment electrolyzer with titanium electrodes and cation exchange membrane.
22. Reaction cycle according to item 21, wherein the polarity of the electrodes in the electrolyzer is changed after step (iii).
23. Reaction cycle according to any of the preceding items, wherein H₂ generated during step (iv) is collected and has preferably a purity of higher than 90-99.9%.
24. Use of a reaction cycle according to any of items 1 - 23 for storing and/or concentrating carbon dioxide.

## Claims

1. Reaction cycle for concentrating CO₂ and producing hydrogen and oxygen comprising the steps
(i) reacting at least one aqueous alkaline metal hydroxide solution with CO₂ to provide aqueous alkaline metal carbonate and/or alkaline metal hydrogen carbonate salt solution;
(ii) reacting the solution obtained after step (i) with chlorine to provide aqueous alkaline metal chloride salt solution, aqueous alkaline metal hypochlorite salt solution, and CO₂;
(iii) electrolyzing the solution obtained after step (ii) for converting aqueous alkaline metal hypochlorite salt solution to aqueous alkaline metal chloride salt solution and oxygen; and
(iv) electrolyzing the solution obtained after step (iii) for converting aqueous alkaline metal chloride salt solution to aqueous alkaline metal hydroxide solution, chlorine (Cl₂), and hydrogen (H₂);
wherein aqueous alkaline metal hydroxide solution generated during step (iv) is redirected to step (i) and chlorine generated during step (iv) is redirected to step (ii), and
wherein the alkaline metal is preferably selected from the group consisting of lithium, sodium, potassium, and rubidium, in particular sodium and potassium.

2. Reaction cycle according to claim 1, wherein the concentration of the aqueous alkaline metal hydroxide solution in step (i) is 50 g/I or more up to a saturated aqueous alkaline metal hydroxide solution, preferably 50 - 300 g/l.

3. Reaction cycle according to any of the preceding claims, wherein CO₂ dissolved in water is added to or gas containing CO₂, in particular flue gas, is injected into the aqueous alkaline metal hydroxide solution in step (i), and
wherein CO₂ is preferably used in a stoichiometric excess as compared to hydroxide in step (i).

4. Reaction cycle according to any of the preceding claims, wherein in step (ii) chlorine dissolved in water is added to the solution obtained after step (i) and/or
wherein step (ii) is conducted at temperatures of 10 - 50 °C, and/or
wherein in step (ii) chlorine is used in a stoichiometric amount as compared to carbonate and/or hydrogen carbonate salt, and/or
wherein CO₂ generated during step (ii) is collected and has preferably a purity of 80 %-99.9%, and/or
wherein CO₂ generated during step (ii) is at least partially redirected to step (i).

5. Reaction cycle according to any of the preceding claims, wherein the electrolysis in step (iii) is conducted at a current density of 5-1000 A/m² and/or
wherein the electrolysis in step (iii) is conducted at a potential of 1.5 - 4 V, and/or
wherein the electrolysis in step (iii) is conducted at a temperature of 10 - 50°C, and/or
wherein the hypochlorite salt concentration in step (iii) corresponds to 10-50% of the hydroxide concentration in step (i), and/or
wherein O₂ generated during step (iii) is collected and has preferably a purity of 80-99.9 %.

6. Reaction cycle according to any of the preceding claims, wherein the electrolysis in step (iv) is conducted at a current density of 5-1000 A/m².

7. Reaction cycle according to any of the preceding claims, wherein the electrolysis in step (iv) is conducted at a potential of 1.5-4 V.

8. Reaction cycle according to any of the preceding claims, wherein the electrolysis in step (iv) is conducted at a temperature of 10-90 °C.

9. Reaction cycle according to any of the preceding claims, wherein the electrolysis in step (iii) and (iv) is conducted each in a two-compartment electrolyzer, preferably with titanium electrodes and cation exchange membrane.

10. Reaction cycle according to any of the preceding claims, wherein the electrolysis in steps (iii) and (iv) is conducted in the same electrolyzer, in particular in a two-compartment electrolyzer with titanium electrodes and cation exchange membrane.

11. Reaction cycle according to claim 10, wherein the polarity of the electrodes in the electrolyzer is changed between step (iii) and (iv).

12. Reaction cycle according to the preceding claims, wherein H₂ generated during step (iv) is collected and has preferably a purity of higher than 90-99.9%.

13. Use of a reaction cycle according to any of claims 1 - 12 for storing and/or concentrating carbon dioxide.
